# EUROPÄISCHE PATENTSCHRIFT

(11) **EP 3 495 646 B1**
(45) Veröffentlichungstag und Bekanntmachung des Hinweises auf die Patenterteilung: **09.03.2022**
(21) Anmeldenummer: 18205563.2
(22) Anmeldetag: 12.11.2018
(51) Int. Cl.: F02D 41/02, F01N 9/00, F01N 3/023

(54) **PARTIKELFILTERVORRICHTUNG UND BETRIEBSVERFAHREN**
PARTICLE FILTER DEVICE AND METHOD OF OPERATION
DISPOSITIF DE FILTRATION DES PARTICULES ET PROCÉDÉ DE FONCTIONNEMENT

(30) Priorität: 07.12.2017 DE 102017222142
(43) Veröffentlichungstag der Anmeldung: 12.06.2019
(73) Patentinhaber: Bayerische Motoren Werke Aktiengesellschaft, 80809 München (DE)
(72) Erfinder: Tschochohei, Miriam, 80796 München (DE); Mehringer, Florian, 80992 München (DE)

(56) Entgegenhaltungen:
- DE-A1-102006 033 567
- DE-A1-102012 010 189
- DE-A1-102016 202 349
- DE-A1-102017 115 830

## Beschreibung

Die Erfindung betrifft eine Partikelfiltervorrichtung für eine Abgasanlage eines Verbrennungsmotors in einem Kraftfahrzeug, eine Abgasanlage für einen Verbrennungsmotor eines Kraftfahrzeugs mit einer solchen Partikelfiltervorrichtung sowie ein Verfahren zum Betrieb, insbesondere zur Verbesserung der Effizienz, einer solchen Partikelfiltervorrichtung.

In dem Bestreben, eine immer höhere Güte der Abgase von Verbrennungsmotoren in Kraftfahrzeugen zu erreichen, indem die Emission von Schadstoffen immer weiter gesenkt wird, sind die Hersteller von Kraftfahrzeugen und insbesondere auch die Hersteller von Abgasanlagen dazu übergegangen, auch bei Ottomotoren Partikelfilter in der Abgasanlage zu verwenden, insbesondere zur Vermeidung einer Emission von Partikeln.

Die Erfindung ist nachfolgend im Kontext von Partikelfiltern für Ottomotoren beschrieben, ist aber ihrer Grundidee nach für sämtliche Partikelfilter in Luftführungen von Kraftfahrzeugen verwendbar, gegebenenfalls mit fachüblichen Anpassungen an den entsprechenden Anwendungsfall.

Partikelfilter für Ottomotoren (auch Ottopartikelfilter OPF genannt) werden in immer mehr Neufahrzeugen in den Abgasstrom der Abgasanlage eingebaut, um dort Aschepartikel und Rußpartikel aus dem Abgas zu filtern. Während die Aschepartikel, die sich im Partikelfilter fangen, aufgrund ihrer nicht brennbaren Beschaffenheit bis zum Ende der Lebensdauer des Filters dort verbleiben, ist es möglich, den Partikelfilter hinsichtlich seiner Beladung mit Rußpartikeln zu regenerieren, sprich den Beladungsgrad ohne Austausch des Filters wieder zu senken.

Dies ist möglich, weil es sich bei den Rußpartikeln im Wesentlichen um unverbrannten Kraftstoff handelt.

Insoweit handelt es sich bei den Rußpartikeln zumindest im Wesentlichen um Kohlenwasserstoffe, die bei einer ausreichend hohen Temperatur und einem ausreichenden Sauerstoffgehalt in gasförmige Bestandteile umgesetzt werden können. Diesen Mechanismus macht man sich bei der Regeneration der Partikelfilter zu Nutze.

Mittels einer Steuereinheit wird zu einem geeigneten Zeitpunkt im Betrieb des Verbrennungsmotors der Sauerstoffgehalt der Abgase einerseits und die Abgastemperatur andererseits durch geeignete fachübliche Maßnahmen derart beeinflusst, dass die oben beschriebene Pyrolyse stattfinden kann. Ein solcher geeigneter Zeitpunkt kann beispielsweise eine Schubabschaltungsphase oder eine andere Phase im Betrieb des Verbrennungsmotors sein, in welcher sich aus dem realen Fahrprofil des Kraftfahrzeugs die Möglichkeit ergibt, die Abgastemperatur ohne negative Konsequenzen für die Abgasgüte zu erhöhen.

Bekannte Ottopartikelfilter regenerieren ihren Partikelfilter während des Regenerations-Betriebsmodus (möglichst) vollständig. Es hat sich jedoch herausgestellt, dass nach Abschluss eines solchen Regenerationszyklus die Filtereffizienz häufig vorübergehend schlechter ist als zuvor.

Aus der DE 10 2012 010 189 A1 ist ein Verfahren zum Regenerieren eines Partikelfilters eines Fahrzeugs bekannt, bei welchem das Regenerieren in Abhängigkeit von einer Beladung des Partikelfilters mit Partikeln eingeleitet wird, wobei ein Fahrbetrieb des Fahrzeugs berücksichtigt und in Abhängigkeit vom Fahrbetrieb das Regenerieren vor dem Erreichen eines oberen Schwellenwerts der Beladung eingeleitet oder ein bereits eingeleitetes Regenerieren vor dem Erreichen eines unteren Schwellenwerts der Beladung abgebrochen wird.

Aus der DE 10 2006 033 567 A1 ist ein Verfahren zum Bestimmen des Auslösezeitpunktes eines Regenerationsprozesses zum Regenerieren eines in den Abgasstrang einer Brennkraftmaschine eingeschalteten Partikelfilters mit folgenden Schritten bekannt: Bestimmen des aktuellen Rußbeladungszustandes des Partikelfilters; Vergleichen des ermittelten Beladungszustandes mit einem Kennfeld, aufgebaut aus Daten, die bei unterschiedlichen Betriebszuständen der Brennkraftmaschine die für ein Regenerationsprozess mit hinreichendem Regenerationserfolg notwendige Rußbeladung darstellen; Setzen eines Flag "Beladungszustand OK", wenn die aktuell ermittelte Rußbeladung größer oder gleich der durch das Kennfeld geforderten Mindestrußbeladung ist; und wenn das Flag "Beladungszustand OK" gesetzt ist, Bestimmen des voraussichtlichen Regenerationserfolges, wenn im Zeitpunkt dieser Bestimmung in Abhängigkeit von dem aktuellen Betriebszustand der Brennkraftmaschine der Regenerationsprozess ausgelöst werden würde, und Setzen eines Flag "Regeneration Start", wenn der voraussichtliche Regenerationserfolg hinreichend ist.

Vor diesem Hintergrund ist es daher eine Aufgabe der Erfindung, eine Filtrationseffizienz einer Partikelfiltervorrichtung zu verbessern.

Diese Aufgabe wird gelöst durch eine Partikelfiltervorrichtung für eine Abgasanlage eines Verbrennungsmotors in einem Kraftfahrzeug mit den Merkmalen von Anspruch 1 und durch ein Verfahren zum Betrieb, insbesondere zur Verbesserung der Effizienz, einer Partikelfiltervorrichtung mit den Merkmalen von Anspruch 6. Der Anspruch 5 stellt auf eine Abgasanlage für einen Verbrennungsmotor eines Kraftfahrzeugs mit einer solchen Partikelfiltervorrichtung ab. Vorteilhafte Ausführungen der Erfindung sind Gegenstand der abhängigen Ansprüche.

Gemäß einem Aspekt der Erfindung wird eine Partikelfiltervorrichtung für eine Abgasanlage eines Verbrennungsmotors in einem Kraftfahrzeug bereitgestellt. In einer bevorzugten Ausführung handelt es sich um eine Ottopartikelfiltervorrichtung für eine Abgasanlage eines Ottomotors in einem Kraftfahrzeug. In jedem Fall weist die Vorrichtung auf:
a) einen Partikelfilter zur Filtration von Rußpartikeln aus einem in der Abgasanlage geführten Abgasstrom, wobei der Partikelfilter insbesondere eine Vielzahl von gasdurchlässigen Poren aufweist, die vorzugsweise eine durchschnittliche Porengröße aufweisen, mit der ein großer Teil der Rußpartikel aus dem Abgas herausgefiltert werden kann. Die Abstimmung der zu verwendenden Porengröße kann in fachüblicher Weise in Abhängigkeit von der Beschaffenheit und/oder der Größe der zu filternden Partikel erfolgen.
b) eine Regenerationseinrichtung, die eingerichtet ist, den Partikelfilter in einen Regenerations-Betriebsmodus zu versetzen, insbesondere durch Bereitstellung einer ausreichend hohen Abgastemperatur und/oder eines ausreichend hohen Sauerstoffgehalts im Abgasstrom, vorzugsweise bei einer Schubabschaltungsphase des Verbrennungsmotors. Unter Bereitstellung kann neben einer aktiven Beeinflussung von Einflussparametern insbesondere auch eine aktive Verwendung von Veränderungen der Abgastemperatur und/oder des Sauerstoffgehalts im Abgasstrom zu verstehen sein, die sich aus dem Betrieb anderer Komponenten wie beispielsweise eines Katalysators der Abgasanlage oder des Verbrennungsmotors selbst ergibt.
c) eine Filterzustandsermittlung, insbesondere unter anderem, zur Ermittlung eines Beladungsgrads des Partikelfilters mit Rußpartikeln, vorzugsweise mittels eines Filterbetriebsmodells.
d) eine Steuereinheit zur Ansteuerung der Regenerationseinrichtung, wobei in der Steuereinheit vorzugsweise wenigstens ein Auslösekriterium für den Regenerations-Betriebsmodus der Regenerationseinrichtung hinterlegt ist, und wobei die Steuereinheit dazu eingerichtet ist, bei einem Eintreten des Auslösekriteriums den Regenerations-Betriebsmodus anzusteuern. Als ein Auslösekriterium kann insbesondere ein Maximum-Schwellenwert für den Beladungsgrad und/oder ein bestimmter Betriebszustand des Verbrennungsmotors wie beispielsweise eine Schubabschaltungsphase und/oder eine Regenerationsphase eines Katalysators der Abgasanlage herangezogen werden. Vorzugsweise wird ein gestaffeltes System von Auslösekriterien verwendet: zunächst wird ein Regenerationsbedarf geschaltet (also quasi angemeldet), wenn beispielsweise ein Maximum-Schwellenwert für den Beladungsgrad überschritten wird (Auslösekriterium erster Stufe). Anschließend wird abgewartet, bis ein geeigneter Motor-Betriebspunkt für die Regeneration vorliegt.

In der Steuereinheit ist zusätzlich ein Grenz-Schwellenwert für den Beladungsgrad des Partikelfilters hinterlegt. Die Steuereinheit ist dazu eingerichtet, bei einem Unterschreiten des Grenz-Schwellenwertes den Regenerations-Betriebsmodus abzuschalten. Mit dem Begriff 'Unterschreiten' ist insbesondere gemeint, dass zunächst ein Beladungsgrad unterhalb des Grenz-Schwellenwertes ermittelt wurde und anschließend ein Beladungsgrad oberhalb des Grenz-Schwellenwertes.

Gemäß einem weiteren Aspekt der Erfindung wird eine Abgasanlage für einen Verbrennungsmotor eines Kraftfahrzeugs bereitgestellt, welche wenigstens eine Partikelfiltervorrichtung gemäß einer Ausführung der Erfindung aufweist.

Gemäß einem weiteren Aspekt der Erfindung wird ein Verfahren zum Betrieb, insbesondere zur Verbesserung der Effizienz, einer Partikelfiltervorrichtung gemäß einer Ausführung der Erfindung bereitgestellt. Das Verfahren weist zumindest folgende Schritte auf: i) Ermitteln eines Beladungsgrads des Partikelfilters mit Rußpartikeln, ii) Ansteuerung eines Regenerations-Betriebsmodus oder eines Beladungs-Betriebsmodus der Regenerationseinrichtung in Abhängigkeit von dem ermittelten Beladungsgrad.

Der Erfindung liegt unter anderem die Erkenntnis zu Grunde, dass die typischerweise verwendeten Rußpartikelfilter ihre maximale Filtrationseffizienz nicht bei einem leeren Filter, sondern erst ab einer ausreichenden Beladung des Filters aufweisen. Dieser Effekt ergibt sich aus der unterschiedlichen Partikelgröße der Rußpartikel. Die Porengröße des Partikelfilters muss so gewählt werden, dass eine ausreichende Luftdurchlässigkeit gegeben ist, sodass der Gegendruck im Abgassystem möglichst gering gehalten werden kann, um den Motorbetrieb nicht negativ zu beeinflussen. Wenn dies der Fall ist, werden die kleinsten Rußpartikel durch die bereits angelagerten Rußpartikel aufgehalten und können den Filter nicht mehr passieren.

Bekannte Partikelfiltervorrichtungen sind daher mit ihrer vollständigen Regeneration wie oben beschrieben nur unzureichend in der Lage, zu jedem Betriebszeitpunkt ein optimales Filtrationsergebnis zu gewährleisten. Insbesondere filtern Partikelfilter mit einem Beladungsgrad mit Rußpartikeln von 0 oder mit einem geringen Beladungsgrad im Abgasstrom neu herangeführt Rußpartikel schlechter als Partikelfilter mit einem höheren Beladungsgrad.

Die Erfindung basiert nun zum anderen auf der Idee, einen Grenz-Schwellenwert festzulegen, unterhalb dessen das Filtrationsergebnis nicht mehr zufriedenstellend ist, insbesondere weil zu viel Ruß im Abgasstrom verbleibt. Dieser Grenz-Schweilenwert dient dann als Entscheidungskriterium (gegebenenfalls als eines von mehreren Entscheidungskriterien), ob tendenziell eher Rußpartikel vom Filter entfernt werden sollen oder Rußpartikel auf den Filter aufgebracht werden sollen, um eine dauerhafte Funktionalität und/oder eine hohe Filtrationseffizienz sicherzustellen.

Mit der Abschaltung dies Regenerations-Betriebsmodus bei einem unterschreiten des Grenz-Schwellenwerts wird sichergestellt, dass die Regeneration des Partikelfilters nicht zu einer ungewünschten Senkung der Filtrationseffizienz führt. Damit kann auch sichergestellt werden, dass zu jedem Zeitpunkt im Betrieb des Fahrzeugs gegebenenfalls geltende Grenzwerte für Rußemissionen eingehalten werden können.

Zudem ist die Steuereinheit dazu eingerichtet, bei einem Unterschreiten des Grenz-Schwellenwertes und/oder einem Vorliegen eines Beladungsgrads unterhalb des Grenz-Schwellenwertes die Regenerationseinrichtung in einen Beladungs-Betriebsmodus zu versetzen.

Damit kann die Partikelfiltervorrichtung entgegenwirken, wenn - beispielsweise durch einen zu ausführlichen Regenerationsprozess oder durch den Einbau eines neuen, "leeren" Filters - der Partikelfilter mit einem zu niedrigen Beladungsgrad für eine ausreichende Filtrationseffizienz vorliegt.

In dem Beladungs-Betriebsmodus ist vorzugsweise vorgesehen, den Betrieb des Verbrennungsmotors derart zu beeinflussen, dass, vorzugsweise ohne schädliche Auswirkungen auf andere Emissionen (zumindest nach der Abgasnachbehandlung), die Verbrennung des Kraftstoffes unter verstärkter Rußbildung abläuft. Dazu kann beispielsweise vorgesehen sein, den Kraftstoff im Brennraum später zu zünden und/oder den Kraftstoff nicht auf einmal einzuspritzen, sondern in Teileinspritzungen, wobei ein kleinerer Teil der Gesamtmenge sehr spät eingespritzt wird, vorzugsweise erst zur Zündung.

Um eine unnötige Beladung des Partikelfilters mit Rußpartikeln - jenseits des vorteilhaften Erreichens des Grenz-Schwellenwertes - zu vermeiden, ist gemäß einer Ausführung die Steuereinheit dazu eingerichtet, bei einem Überschreiten des Grenz-Schwellenwertes den Beladungs-Betriebsmodus abzuschalten. Mit dem Begriff 'Überschreiten' ist insbesondere gemeint, dass zunächst ein Beladungsgrad unterhalb des Grenz-Schwellenwertes ermittelt wurde und anschließend ein Beladungsgrad oberhalb des Grenz-Schwellenwertes.

Damit die Regelung der Betriebsmodi der Regenerationseinrichtung oder eine komplexe Sensorstrecke auskommt und/oder dadurch eine Integration in einen vorhandenen digitalen Zwilling des Fahrzeuges vereinfacht wird, ist gemäß einer Ausführung die Filterzustandsermittlung dazu eingerichtet, den Beladungsgrad des Partikelfilters anhand eines Filterbetriebsmodells zu ermitteln, in welchem ein zu erwartender Beladungsgrad in Abhängigkeit von Betriebsparametern der Abgasanlage und/oder des Verbrennungsmotors angegeben ist.

Als Betriebsparameter können insbesondere ein, mehrere oder alle Parameter aus der folgenden Liste berücksichtigt werden: eine Abgastemperatur am Partikelfilter und/oder an einem Katalysator der Abgasanlage, ein Sauerstoffgehalt des Abgases in einer Leitung und/oder einem Katalysator der Abgasanlage, eine Drehzahl des Verbrennungsmotors, ein Lastzustand des Verbrennungsmotors. Vorzugsweise können dazu auch Betriebsparameter und/oder Zusammenhänge aus einem Betriebsmodell des Verbrennungsmotors und/oder der Abgasanlage mittels der Steuereinheit herangezogen werden, wie beispielsweise eine Motorkühlmitteltemperatur.

Um - gegebenenfalls in Abhängigkeit von Regenerationszyklen von Katalysatoren der Abgasanlage - potentielle Regenerationsphasen des Partikelfilters planen zu können, ist gemäß einer Ausführung in dem Filterbetriebsmodell (auch) eine zu erwartende zeitliche Entwicklung des Beladungsgrades in Abhängigkeit von den Betriebsparametern der Abgasanlage angegeben.

Ein Betrieb der Partikelfiltervorrichtung kann im Sinne der Erfindung unter anderem entsprechend der nachfolgend beschriebenen Ausführung erfolgen:
Gemäß einer Ausführung wird die Regenerationseinrichtung in den Regenerations-Betriebsmodus geschaltet, wenn wenigstens ein Auslösekriterium eintritt. Gemäß einer weiteren Ausführung wird er Regenerations-Betriebsmodus abgeschaltet, wenn der Beladungsgrad den Grenz-Schwellenwert unterschreitet. Stattdessen kann gemäß einer weiteren Ausführung die Regenerationseinrichtung in den Beladungs-Betriebsmodus geschaltet werden, wenn der Beladungsgrad kleiner ist als der Grenz-Schwellenwert. Dieser Fall kann beispielsweise eintreten, wenn der Regenerations-Betriebsmodus zu lange oder unter fehlerhaften Voraussetzungen aktiv war, oder er kann eintreten, wenn ein neuer, unbeladener Filter eingesetzt wurde, beispielsweise beim Einbau im Werk oder bei einem Austausch in der Werkstatt. Gemäß einer Ausführung kann auch beim Werkseinbau eine Vorkonditionierung des Partikelfilters erfolgen, indem im Werksablauf die Partikelfiltervorrichtung in den Beladungs-Betriebsmodus geschaltet und damit der Partikelfilter soweit beladen wird, dass bei Abgabe an den Fahrzeugkunden schon eine ausreichende Filtrationsrate vorliegt.

Unabhängig davon, welche dieser Fälle vorliegt, wird gemäß einer Ausführung der Beladungs-Betriebsmodus abgeschaltet, wenn der Beladungsgrad (wieder) den Grenz-Schwellenwert überschreitet.

Gemäß einer Ausführung wird dabei der Beladungsgrad ermittelt, indem jeweils eine Ausprägung von Betriebsparametern der Abgasanlage und/oder des Verbrennungsmotors ermittelt wird, und indem dem Filterbetriebsmodell ein zu erwartender Beladungsgrad in Abhängigkeit von den ermittelten Ausprägungen entnommen wird.

Gegebenenfalls ist ein Regenerations-Betriebsmodus zukünftig auch in Abstimmung mit einer Regeneration anderer Abgas-Nachbehandlungs-Komponenten wie beispielsweise mit einem Katalysator des Fahrzeuges vorgesehen. Ein solches Vorgehen kann sich anbieten, weil typischerweise der Ottopartikelfilter im Abgasstrom unmittelbar nach den Katalysatoren oder im Verbund mit den Katalysatoren verbaut ist.

Um einen zusätzlichen Schutz gegen eine zu geringe Beladung des Partikelfilters zu schaffen, wird gemäß einer Ausführung - sobald eine Schwellentemperatur im Partikelfilter erreicht ist - mittels der Motorsteuerung Schubabschaltungsphasen verhindert. Dadurch kann verhindert werden, dass in bestimmten Fällen im kunden-üblichen Betrieb ohne die Auslösung des Regenerations-Betriebsmodus eine Temperatur im Partikelfilter erreicht wird, bei der die Partikel unter Sauerstoffzufuhr verbrennen und der Beladungsgrad zu stark sinkt.

Weitere Merkmale, Vorteile und Anwendungsmöglichkeiten der Erfindung ergeben sich aus der nachfolgenden Beschreibung im Zusammenhang mit den Figuren. Es zeigen, teilweise in stark schematisierter Darstellung,
- Fig. 1: einen Verbrennungsmotor mit einer Abgasanlage, die eine Partikelfiltervorrichtung gemäß einer beispielhaften Ausführung der Erfindung aufweist, in einer Schemaansicht; und
- Fig. 2: ein Diagramm zur Festlegung eines Grenz-Schwellenwertes für einen Beladungsgrad des Partikelfilters mit Rußpartikeln zum Betrieb der Partikelfiltervorrichtung gemäß Fig. 1 oder einer Partikelfiltervorrichtung gemäß einer anderen beispielhaften Ausführung der Erfindung.

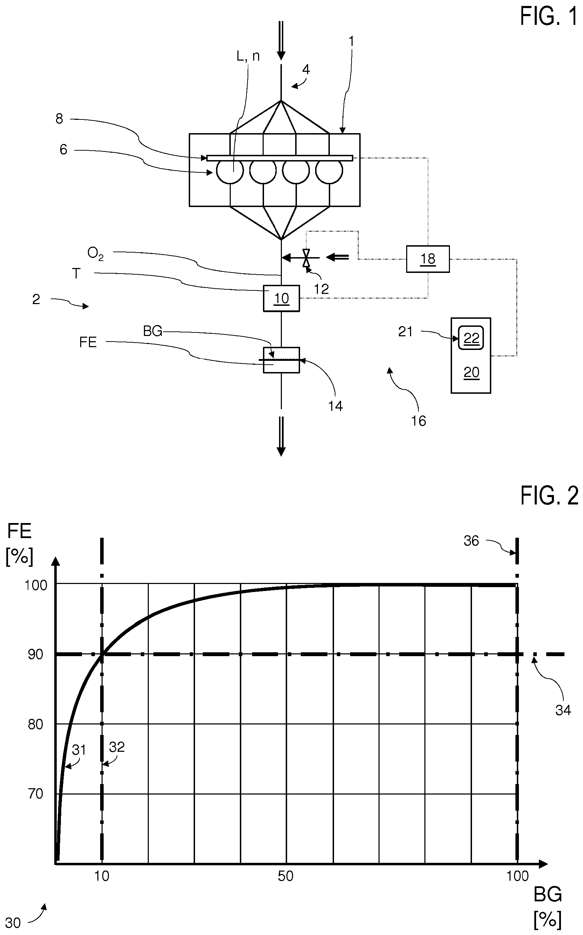

In Fig. 1 ist ein Verbrennungsmotor 1 mit einer Abgasanlage 2 dargestellt. Der Verbrennungsmotor 1 ist im Ausführungsbeispiel ein Vierzylinder-Ottomotor, kann aber auch ein anderer Motor sein. Der Motor 1 wird mittels einer Ladeluftzuführung 4 mit Ladeluft versorgt (der obere doppelt gestrichene Pfeil stellt vereinfacht die Frischluftzufuhr dar.) In die Zylinder 6 wird an den Zylinderköpfen 8 Ladeluft und Kraftstoff in regelbaren Mengen bzw. Verhältnissen bereitgestellt.

Der Abgasstrom wird aus dem Zylinder 6 mittels der Abgasanlage 2 abgeführt, wobei die Abgasanlage 2 neben den Abgasrohrleitungen 4 einen Dreiwegekatalysator 10 und einen regelbaren Sauerstoffeingang 12 aufweist, der im Ausführungsbeispiel mit einem stufenlos steuerbaren Ventil ausgebildet ist und vor dem Dreiwegekatalysator 10 in den Abgasstrom mündet. Das Ausführungsbeispiel ist mit einer Sekundärluftzuführung (Sauerstoffeingang 12) beschrieben; in anderen, nicht dargestellten beispielhaften Ausführungen der Erfindung kann die Partikelfiltervorrichtung selbstverständlich auch ohne sekundäre Luftzuführung betrieben werden.

Im Abgasstrom nach dem Dreiwegekatalysator 10 ist ein regenerierbarer und austauschbarer Partikelfilter 14 der beispielhaften Partikelfiltervorrichtung 16 angeordnet. Stromabwärtig des Partikelfilters 14 wird das nachbehandelte und rußgefilterte Abgas beispielsweise an einem Auspuff in die Umgebung ausgeblasen (der untere doppelt gestrichene Pfeil stellt vereinfacht die Auspuffanlage dar). Das Ausführungsbeispiel ist mit einem nach dem Katalysator 10 angeordneten Partikelfilter 14 beschrieben; in anderen, nicht dargestellten beispielhaften Ausführungen der Erfindung kann die Partikelfiltervorrichtung selbstverständlich auch mit einem Partikelfilter betrieben werden, der eine katalytische Beschichtung aufweist, sodass der Dreiwegekatalysator 10 und der Partikelfilter 14 kombiniert ausgeführt sind.

Die Partikelfiltervorrichtung 16 weist neben dem Partikelfilter 14 eine Regenerationseinrichtung 18, eine Steuereinheit 20 und eine Filterzustandsermittlung 21 mit einem Filterbetriebsmodell 22 auf. Die Regenerationseinrichtung 18 ist zur Übermittlung von Steuer- und/oder Sensorsignalen mit den Zylinderköpfen 8, dem Sauerstoffeingang 12 und dem Dreiwegekatalysator 10 verbunden.

Das Filterbetriebsmodell 22 ist beispielsweise auf einem Datenträger der Steuereinheit 20 oder auf einem Datenträger eines übergeordneten Steuermittels des Kraftfahrzeugs verfügbar, kann aber auch über eine Datenverbindung von einer Cloud und/oder von einem Server des Fahrzeugherstellers oder in anderer fachüblicher Weise bereitgestellt sein.

In Fig. 2 ist ein Diagramm 30 zur Festlegung eines Grenz-Schwellenwertes 32 für einen Beladungsgrad BG des Partikelfilters mit Rußpartikeln zum Betrieb der Partikelfiltervorrichtung dargestellt. In dem Diagramm 30 ist dazu in einer Kurve 31 der vorweg ermittelte Zusammenhang zwischen dem Beladungsgrad BG und einer Filtrationseffizienz FE dargestellt.

Es ist ersichtlich, dass auch bei einem leeren Filter - also bei einem Filter mit einem Beladungsgrad BG von wenigen Prozent des maximalen Beladungsgrads - bereits eine Filtrationseffizienz FE von über 60 % erreicht wird. Als ausreichend hinsichtlich der Emissionen von Rußpartikeln wird im Ausführungsbeispiel allerdings erst eine Filtrationseffizienz von wenigstens 90 % angesehen. Folglich wird ein Effizienz-Grenzwert 34 von 90 % festgelegt.

Dieser Effizienz-Grenzwert 34 wird im Ausführungsbeispiel erreicht ab einem Beladungsgrad BG des Partikelfilters 14 von 10 % (vergleiche Kurve 31). Dementsprechend wird ein Grenz-Schwellenwert 32 von 10 % festgelegt.

In anderen Worten: solange der Partikelfilter 14 einen Beladungsgrad BG von mindestens 10 % aufweist, filtert er Rußpartikel ausreichend effizient aus dem Abgasstrom aus, damit das Kraftfahrzeug die gesetzten Emissionsgrenzwerte einhalten kann.

Nachfolgend wird die Funktionsweise der Partikelfiltervorrichtung unter Bezugnahme auf die Figuren 1 und 2 detailliert erläutert:
Die Steuereinheit 20 erfasst - gegebenenfalls unter Rückgriff auf die Leitungen der Regenerationseinrichtung - regelmäßig (also beispielsweise vielfach jede Sekunde) Ausprägungen von Betriebsparametern des Verbrennungsmotors 1 und der Abgasanlage 2. Im Ausführungsbeispiel sind diese Betriebsparameter (ggf. unter anderem): ein Lastzustand L des Verbrennungsmotors, eine Drehzahl n des Verbrennungsmotors, ein Sauerstoffgehalt O₂ zwischen dem Sauerstoffeingang 12 und dem Dreiwegekatalysator 10 sowie eine Abgastemperatur T am Dreiwegekatalysator 10.

Diese Betriebsparameter werden während des Betriebs des Verbrennungsmotors 1 laufend überwacht. Mit einem verhältnismäßig großen Aufwand bei einem Gebrauch von Sensoren könnte diese Überwachung mittels der Steuereinheit 20 mit direkten Messungen sensorbasiert stattfinden; im Ausführungsbeispiel erfolgt die Überwachung jedoch im Normalfall mittels eines Fahrzeugbetriebsmodells, insbesondere mittels eines Motorbetriebsmodells, das mit der Steuereinheit verbunden ist, in an sich fachüblicher Weise.

In Abhängigkeit von den derart ermittelten Ausprägungen der genannten Betriebsparameter wird mittels der Steuereinheit 20 ein aktueller Beladungsgrad des Partikelfilters 14 mit Rußpartikeln ermittelt, indem in dem Filterbetriebsmodell 22 ein für die ermittelte Kombination von Ausprägungen der Betriebsparameter hinterlegter Beladungsgrad BG ermittelt und an die Steuereinheit 20 gemeldet wird.

In Abhängigkeit von dem gemeldeten Beladungsgrad wird in der Steuereinheit 20 festgehalten, welcher Betriebsmodus der Regenerationseinrichtung 18 infrage kommt: ist der Beladungsgrad BG niedriger als der Grenz-Schwellenwert 32, ist dies der Beladungs-Betriebsmodus; ist der Beladungsgrad BG höher als der Grenz-Schwellenwert 32, ist dies der Regenerations-Betriebsmodus.

Bei einem Beladungsgrad BG unterhalb des Grenz-Schwellenwerts 32 wird wegen der zu erwartenden, unzureichenden Filtrationseffizienz FE die Regenerationseinrichtung 18 vorzugsweise unmittelbar und ohne weiteres in den Beladungs-Betriebsmodus geschalten.

Dabei beeinflusst die Regenerationseinrichtung 18 die Verbrennung in den Zylindern 6, indem beispielsweise eine spätere Zündung der Zündkerzen an den Zylinderköpfen 8 und eine aufgeteilte Einspritzung des Kraftstoffes angesteuert wird, um eine rußhaltigere Verbrennung bei ansonsten gleichbleibender Abgasgüte (zumindest nach der Abgasnachbehandlung) zu erreichen. Auch kann im Rahmen der gesetzlichen Vorgaben gegebenenfalls zur Verbrennung in den Zylindern das Kraftstoff-Luft-Gemisch angefettet werden (Verhältnis λ < 1). Über diesen Mechanismus kann der Beladungsgrad BG des Partikelfilters 14 möglichst schnell bis zum Grenz-Schwellenwert 32 gebracht werden, und so frühzeitig eine ausreichende Filtrationseffizienz FE des Partikelfiltervorrichtung 16 sichergestellt werden.

Bei einem Beladungsgrad BG oberhalb des Grenz-Schwellenwerts 32 kann die Regenerationseinrichtung 18 in den Regenerations-Betriebsmodus geschaltet werden, wenn hierfür wenigstens ein weiteres Auslösekriterium vorliegt. Ein solches Auslösekriterium liegt beispielsweise vor, wenn der Beladungsgrad BG des Partikelfilters 14 einen Maximum-Schwellenwert 36 von 100 % überschritten hat und/oder wenn eine Schubabschaltungsphase des Verbrennungsmotors 1 vorliegt und/oder wenn bereits der Dreiwegekatalysator 10 in eine Regenerationsphase geschaltet wurde.

Bei Vorliegen eines solchen Auslösekriteriums und einem Beladungsgrad BG oberhalb des Grenz-Schwellenwerts 32 wird die Regenerationseinrichtung 18 also in den Regenerations-Betriebsmodus geschaltet.

Dabei wird unter anderem über die nicht dargestellte Lambda-Regelung und/oder über eine Öffnung des Ventils am Sauerstoffeingang 12 der Sauerstoffanteil im eingespritzten Luft-Kraftstoffgemisch und/oder im Abgasstrom erhöht, um eine verbesserte Verbrennung und/oder eine verbesserte exotherme Reaktion im Dreiwegekatalysator 10 zu erreichen. Aus beidem heraus kann - neben dem direkt folgenden höheren Sauerstoffgehalt - eine erhöhte Abgastemperatur erzielt werden. Sind der Sauerstoffgehalt und die Abgastemperatur hoch genug, können die Rußpartikel im Partikelfilter 14, insbesondere pyrolytisch, umgesetzt werden. Der Beladungsgrad BG sinkt.

Der Regenerations-Betriebsmodus wird abgeschaltet, wenn der Beladungsgrad den Grenz-Schwellenwert 32 unterschreitet. Stattdessen kann beispielsweise die Regenerationseinrichtung 18 in den Beladungs-Betriebsmodus geschaltet werden, wenn der Beladungsgrad BG kleiner ist als der Grenz-Schwellenwert 32. Dieser Fall kann beispielsweise eintreten, wenn der Regenerations-Betriebsmodus zu lange oder unter fehlerhaften Voraussetzungen aktiv war, oder er kann eintreten, wenn ein neuer, unbeladener Partikelfilter 14 eingesetzt wurde. Unabhängig davon, welcher dieser Fälle vorliegt, wird gemäß einer Ausführung der Beladungs-Betriebsmodus abgeschaltet, wenn der Beladungsgrad (wieder) den Grenz-Schwellenwert 32 überschreitet.

In einer Ausführungsform kann der Grenz-Schwellenwert (nur für die Abschaltung des Beladungs-Betriebsmodus) abgeändert werden, um der Hysterese des Beladungsgrads gerecht zu werden. Dann können leicht unterschiedliche Grenz-Schwellenwerte für Aktivierung und Deaktivierung der Betriebsmodi vorliegen.

### BEZUGSZEICHENLISTE

- 1: Verbrennungsmotor
- 2: Abgasanlage
- 4: Ladeluftzuführung
- 6: Zylinder
- 8: Zylinderköpfe
- 10: Dreiwegekatalysator
- 12: Sauerstoffeingang
- 14: Partikelfilter
- 16: Partikelfiltervorrichtung
- 18: Regenerationseinrichtung
- 20: Steuereinheit
- 21: Filterzustandsermittlung
- 22: Filterbetriebsmodell

- 30: Diagramm
- 31: Kurve
- 32: Grenz-Schwellenwert
- 34: Effizienz-Grenzwert
- 36: Maximum-Schwellenwert

- BG: Beladungsgrad
- FE: Filtrationseffizienz
- n: Drehzahl des Verbrennungsmotors
- L: Lastzustand des Verbrennungsmotors
- T: Temperatur des Abgases am Dreiwegekatalysator
- O₂: Sauerstoffgehalt des Abgases zwischen Sauerstoffeingang und Dreiwegekatalysator

## Patentansprüche

1. **Partikelfiltervorrichtung** (16) für eine Abgasanlage (2) eines Verbrennungsmotors (1) in einem Kraftfahrzeug, wobei die Vorrichtung (16) aufweist:
- einen Partikelfilter (14) zur Filtration von Rußpartikeln aus einem in der Abgasanlage (2) geführten Abgasstrom,
- eine Regenerationseinrichtung (18), die eingerichtet ist, den Partikelfilter (14) in einen Regenerations-Betriebsmodus zu versetzen,
- eine Filterzustandsermittlung (21) zur Ermittlung eines Beladungsgrads (BG) des Partikelfilters (14) mit Rußpartikeln,
- eine Steuereinheit (20) zur Ansteuerung der Regenerationseinrichtung (18), wobei in der Steuereinheit wenigstens ein Auslösekriterium hinterlegt ist, und die Steuereinheit dazu eingerichtet ist, bei einem Eintreten des Auslösekriteriums den Regenerations-Betriebsmodus anzusteuern, wobei in der Steuereinheit (20) ein Grenz-Schwellenwert (32) für den Beladungsgrad (BG) hinterlegt ist, und die Steuereinheit (20) dazu eingerichtet ist, bei einem Unterschreiten des Grenz-Schwellenwertes (32) den Regenerations-Betriebsmodus abzuschalten,
**dadurch gekennzeichnet, dass**
die Steuereinheit (20) dazu eingerichtet ist, bei einem Unterschreiten des Grenz-Schwellenwertes (32) oder einem Vorliegen eines Beladungsgrads (BG) unterhalb des Grenz-Schwellenwertes (32) die Regenerationseinrichtung (18) in einen Beladungs-Betriebsmodus zu versetzen.

2. Partikelfiltervorrichtung (16) gemäß Anspruch 1, **dadurch gekennzeichnet, dass** die Steuereinheit (20) dazu eingerichtet ist, bei einem Überschreiten des Grenz-Schwellenwertes (32) den Beladungs-Betriebsmodus abzuschalten.

3. Partikelfiltervorrichtung (16) gemäß einem der vorhergehenden Ansprüche,
**dadurch gekennzeichnet, dass** die Filterzustandsermittlung (21) dazu eingerichtet ist, den Beladungsgrad (BG) des Partikelfilters (14) anhand eines Filterbetriebsmodells (22) zu ermitteln, in welchem ein zu erwartender Beladungsgrad (BG) in Abhängigkeit von Betriebsparametern (n, L, T, O₂) der Abgasanlage (2) und/oder des Verbrennungsmotors (1) angegeben ist.

4. Partikelfiltervorrichtung (16) gemäß Anspruch 3, **dadurch gekennzeichnet, dass** in dem Filterbetriebsmodell (22) eine zu erwartende zeitliche Entwicklung des Beladungsgrades (BG) in Abhängigkeit von den Betriebsparametern (n, L, T, O₂) der Abgasanlage angegeben ist.

5. **Abgasanlage** (2) für einen Verbrennungsmotor (1) eines Kraftfahrzeugs, **gekennzeichnet durch** wenigstens eine Partikelfiltervorrichtung (16) gemäß einem der vorherigen Ansprüche.

6. **Verfahren** zum Betrieb einer Partikelfiltervorrichtung (16) gemäß einem der vorherigen Ansprüche, **gekennzeichnet durch die Schritte:**
- Ermitteln eines Beladungsgrads (BG) des Partikelfilters (14) mit Rußpartikeln,
- Ansteuerung eines Regenerations-Betriebsmodus oder eines Beladungs-Betriebsmodus der Regenerationseinrichtung (18) in Abhängigkeit von dem ermittelten Beladungsgrad (BG).

7. Verfahren gemäß dem vorhergehenden Anspruch 6, **dadurch gekennzeichnet, dass** die Regenerationseinrichtung (18) in den Regenerations-Betriebsmodus geschaltet wird, wenn wenigstens ein Auslösekriterium eintritt.

8. Verfahren gemäß dem vorhergehenden Anspruch 7, **dadurch gekennzeichnet, dass** der Regeneration-Betriebsmodus abgeschaltet wird, wenn der Beladungsgrad (BG) den Grenz-Schwellenwert (32) unterschreitet.

9. Verfahren gemäß einem der vorhergehenden Ansprüche 6 bis 8, **dadurch gekennzeichnet, dass** die Regenerationseinrichtung (18) in den Beladungs-Betriebsmodus geschaltet wird, wenn der Beladungsgrad (BG) kleiner ist als der Grenz-Schwellenwert (32).

10. Verfahren gemäß dem vorhergehenden Anspruch 9, **dadurch gekennzeichnet, dass** der Beladungs-Betriebsmodus abgeschaltet wird, wenn der Beladungsgrad (BG) den Grenz-Schwellenwert (32) überschreitet.

11. Verfahren gemäß einem der vorhergehenden Ansprüche 6 bis 10, **dadurch gekennzeichnet, dass** der Beladungsgrad (BG) ermittelt wird, indem jeweils eine Ausprägung von Betriebsparametern (n, L, T, O₂) der Abgasanlage (2) und/oder des Verbrennungsmotors (1) ermittelt wird, und indem einem Filterbetriebsmodell (22) ein zu erwartender Beladungsgrad (BG) in Abhängigkeit von den ermittelten Ausprägungen entnommen wird.

## Claims

1. **Particle filter device** (16) for an exhaust system (2) of an internal combustion engine (1) in a motor vehicle, wherein the device (16) has:
- a particle filter (14) for filtering soot particles out of an exhaust-gas stream that is conducted in the exhaust system (2),
- a regeneration device (18) that is configured to set the particle filter (14) into a regeneration operating mode,
- a filter condition determining means (21) for determining a degree of loading (BG) of the particle filter (14) with soot particles,
- a control unit (20) for controlling the regeneration device (18), wherein at least one triggering criterion is stored in the control unit, and the control unit is configured to activate the regeneration operating mode if the triggering criterion is met, wherein a limit threshold value (32) for the degree of loading (BG) is stored in the control unit (20), and the control unit (20) is configured to deactivate the regeneration operating mode if the limit threshold value (32) is undershot,
**characterized in that**
the control unit (20) is configured to set the regeneration device (18) into a loading operating mode if the limit threshold value (32) is undershot or in the presence of a degree of loading (BG) below the limit threshold value (32).

2. Particle filter device (16) according to Claim 1, **characterized in that** the control unit (20) is configured to deactivate the loading operating mode if the limit threshold value (32) is overshot.

3. Particle filter device (16) according to either one of the preceding claims, **characterized in that** the filter condition determining means (21) is configured to determine the degree of loading (BG) of the particle filter (14) on the basis of a filter operation model (22) in which an expected degree of loading (BG) is specified as a function of operating parameters (n, L, T, O₂) of the exhaust system (2) and/or of the internal combustion engine (1).

4. Particle filter device (16) according to Claim 3, **characterized in that** an expected chronological development of the degree of loading (BG) is specified in the filter operation model (22) as a function of the operating parameters (n, L, T, O₂) of the exhaust system.

5. **Exhaust system** (2) for an internal combustion engine (1) of a motor vehicle, **characterized by** at least one particle filter device (16) according to any one of the preceding claims.

6. **Method** for operating a particle filter device (16) according to any one of the preceding claims, **characterized by the steps:**
- determining a degree of loading (BG) of the particle filter (14) with soot particles,
- activating a regeneration operating mode or a loading operating mode of the regeneration device (18) as a function of the determined degree of loading (BG).

7. Method according to the preceding Claim 6, **characterized in that** the regeneration device (18) is switched into the regeneration operating mode if at least one triggering criterion is met.

8. Method according to the preceding Claim 7, **characterized in that** the regeneration operating mode is deactivated if the degree of loading (BG) falls below the limit threshold value (32).

9. Method according to any one of the preceding Claims 6 to 8, **characterized in that** the regeneration device (18) is switched into the loading operating mode if the degree of loading (BG) is lower than the limit threshold value (32).

10. Method according to the preceding Claim 9, **characterized in that** the loading operating mode is deactivated if the degree of loading (BG) overshoots the limit threshold value (32).

11. Method according to any one of the preceding Claims 6 to 10, **characterized in that** the degree of loading (BG) is determined by virtue of a respective characteristic of operating parameters (n, L, T, O₂) of the exhaust system (2) and/or of the internal combustion engine (1) being determined, and by virtue of an expected degree of loading (BG) being obtained from a filter operation model (22) as a function of the determined characteristics.

## Revendications

1. Dispositif à filtre à particules (16) destiné à un système à gaz d'échappement (2) d'un moteur à combustion interne (1) d'un véhicule automobile, le dispositif (16) comportant :
- un filtre à particules (14) destiné à filtrer des particules de suie d'un flux de gaz d'échappement guidé dans le système à gaz d'échappement (2),
- un moyen de régénération (18) qui est conçu pour placer le filtre à particules (14) dans un mode de fonctionnement en régénération,
- un moyen de détermination d'état de filtre (21) destiné à déterminer un degré de charge (BG) du filtre à particules (14) avec des particules de suie,
- une unité de commande (20) destinée à commander le moyen de régénération (18), au moins un critère de déclenchement étant mémorisé dans l'unité de commande, et l'unité de commande étant conçue pour commander le mode de fonctionnement en régénération lorsque le critère de déclenchement intervient, une valeur seuil limite (32) du degré de charge (BG) étant mémorisée dans l'unité de commande (20), et l'unité de commande (20) étant conçue pour désactiver le mode de fonctionnement en régénération si la valeur seuil limite (32) n'est pas atteinte,
**caractérisé en ce que**
l'unité de commande (20) est conçue pour placer le moyen de régénération (18) dans un mode de fonctionnement en charge si la valeur seuil limite (32) n'est pas atteinte ou si le degré de charge (BG) est inférieur à la valeur seuil limite (32).

2. Dispositif de filtre à particules (16) selon la revendication 1, **caractérisé en ce que** l'unité de commande (20) est conçue pour désactiver le mode de fonctionnement en charge si la valeur seuil limite (32) n'est pas atteinte.

3. Dispositif de filtre à particules (16) selon l'une des revendications précédentes, **caractérisé en ce que** le moyen de détermination d'état de filtre (21) est conçu pour déterminer le degré de charge (BG) du filtre à particules (14) à l'aide d'un modèle de fonctionnement de filtre (22) dans lequel un degré de charge attendu (BG) est indiqué en fonction de paramètres de fonctionnement (n, L, T, O₂) du système à gaz d'échappement (2) et/ou du moteur à combustion interne (1).

4. Dispositif de filtre à particules (16) selon la revendication 3, **caractérisé en ce qu'**une évolution attendue dans le temps du degré de charge (BG) est indiquée dans le modèle de fonctionnement de filtre (22) en fonction des paramètres de fonctionnement (n, L, T, O₂) du système à gaz d'échappement.

5. Système à gaz d'échappement (2) destiné à un moteur à combustion interne (1) d'un véhicule automobile, **caractérisé par** au moins un dispositif à filtre à particules (16) selon l'une des revendications précédentes.

6. Procédé de fonctionnement d'un dispositif à filtre à particules (16) selon l'une des revendications précédentes, **caractérisé par** les étapes suivantes :
- déterminer un degré de charge (BG) du filtre à particules (14) avec des particules de suie,
- activer un mode de fonctionnement en régénération ou un mode de fonctionnement en charge du moyen de régénération (18) en fonction du degré de charge (BG) déterminé.

7. Procédé selon la revendication 6 précédente, **caractérisé en ce que** le moyen de régénération (18) est commuté dans le mode de fonctionnement en régénération si au moins un critère de déclenchement intervient.

8. Procédé selon la revendication 7 précédente, **caractérisé en ce que** le mode de fonctionnement en régénération est désactivé si le degré de charge (BG) n'atteint pas la valeur seuil limite (32).

9. Procédé selon l'une des revendications précédentes 6 à 8, **caractérisé en ce que** le moyen de régénération (18) est commuté dans le mode de fonctionnement en charge si le degré de charge (BG) n'atteint pas la valeur seuil limite (32).

10. Procédé selon la revendication 9 précédente, **caractérisé en ce que** le mode de fonctionnement en charge est désactivé si le degré de charge (BG) dépasse la valeur seuil limite (32).

11. Procédé selon l'une des revendications précédentes 6 à 10, **caractérisé en ce que** le degré de charge (BG) est déterminé par détermination d'une catégorie de paramètres de fonctionnement (n, L, T, O₂) du système à gaz d'échappement (2) et/ou du moteur à combustion interne (1), et par obtention d'un degré de charge attendu (BG) tiré d'un modèle de fonctionnement de filtre (22) en fonction des catégories déterminées.
